(19) Europäisches Patentamt
European Patent Office
Office européen des brevets

(11) **EP 1 429 008 B1**

(12) **EUROPÄISCHE PATENTSCHRIFT**

(45) Veröffentlichungstag und Bekanntmachung des Hinweises auf die Patenterteilung:
**10.06.2009  Patentblatt 2009/24**

(51) Int Cl.:
*F02D 21/08* (2006.01)　　　*F02D 41/00* (2006.01)

(21) Anmeldenummer: **03027180.3**

(22) Anmeldetag: **27.11.2003**

(54) **Verfahren und Einrichtung zur Regelung der Abgasrückführung bei Verbrennungsmotoren**

Method and device for controlling the exhaust gas recirculation for internal combustion engines

Méthode et dispositif pour contrôler la recirculation de gaz d'échappement pour moteurs à combustion interne

(84) Benannte Vertragsstaaten:
**AT BE BG CH CY CZ DE DK EE ES FI FR GB GR HU IE IT LI LU MC NL PT RO SE SI SK TR**

(30) Priorität: **10.12.2002  DE 10257568**

(43) Veröffentlichungstag der Anmeldung:
**16.06.2004  Patentblatt 2004/25**

(73) Patentinhaber: **ADAM OPEL AG**
**65423 Rüsselsheim (DE)**

(72) Erfinder:
• **Dickgreber, Frank**
**55128 Mainz (DE)**
• **Landsmann, Gerhard**
**55481 Rödern (DE)**
• **Pflug, Arno**
**55116 Mainz (DE)**

(56) Entgegenhaltungen:
**EP-A- 1 347 166**　　　**EP-A1- 0 641 929**
**DE-A1- 4 326 351**　　　**DE-A1- 19 849 256**

**Beschreibung**

Die Erfindung betrifft ein Verfahren zur Regelung der Abgasrückführung bei Verbrennungsmotoren, wobei Abgas aus der Abgasleitung über einen ventilgeregelten Bypass entnommen und der Ansaugleitung des Motors wieder zugeführt wird, sowie eine Einrichtung zur Abgasrückführung selbst, gemäß dem Oberbegriff des Patentanspruchs 1 und des Patentanspruchs 8.

Verfahren und Systeme zur Abgasrückführung sind vielfältig bekannt. Ein Beispiel dafür ist das Abgasrückführungssystem für eine Brennkraftmaschine aus der DE 199 10 846 A1. Das Abgasrückführungssystem besteht im wesentlichen aus einer zwischen der Ansaugleitung und der Abgasleitung einer Brennkraftmaschine als Bypass angeordneten Abgasrückführungsleitung, in der ein Abgasrückführungsventil eingefügt ist, um hiermit den Strömungsquerschnitt der Abgasrückführungsleitung zu ändern. Das Abgasrückführungsventil wird hierfür elektrisch über das Motorsteuergerät angesteuert. Ein weiteres System zur Abgasrückführung ist aus der DE 19849256 A1 bekannt.

Eine Abgasrückführung verfolgt das Ziel, den Kraftstoffverbrauch und die Stickoxidemission zu senken. Eine genaue Zumessung des rückgeführten Abgases ist erforderlich, um auf der einen Seite das genannten Ziel zu erfüllen und auf der anderen Seite keine Probleme in puncto Fahrbarkeit des Fahrzeuges durch Motoraussetzer etc. zu spüren.

Das Abgasrückführungsventil des bekannten ventilgeregelten Bypasses unterliegt einer Positionsregelung, die einen entsprechenden Strömungsquerschnitt freigibt, um damit die Menge des rückgeführten Abgases zu bestimmen. Die in den einzelnen Betriebsbereichen des Brennkraftmotors rückzuführenden Abgasmengen werden gewöhnlich experimentell ermittelt, um entsprechende Steuerungswerte für das Abgasrückführungsventil zu gewinnen, die im Motorsteuergerät hinterlegt sind.

Bei herkömmlichen Abgasrückführsystemen erfolgt lediglich eine Regelung auf die Ventilposition über eine Positionsrückmeldung. Die tatsächliche Abgasmenge, die durch den eingestellten Querschnitt strömt, ist jedoch abhängig von der aktuellen Temperatur des Gases, der Herstellungstoleranz des Abgasrückführungsventil oder dessen Positionsrückmeldung, den herrschenden Druckverhältnissen sowie dem Verschmutzungsgrad. Somit erweist sich die positionsgeregelte Abgasrückführung als recht ungenau. Im Extremfall kann es zu spürbaren Motoraussetzern kommen.

Der Erfindung liegt daher die Aufgabe zugrunde ein Verfahren sowie eine Einrichtung der gattungsgemäßen Art dahingehend weiter zu verbessern, dass eine präzise Abgasrückführung ohne nachteilige Beeinträchtigung der Betriebsparameter der Brennkraftmaschine erzielt wird.

Die gestellte Aufgabe wird bei einem Verfahren der gattungsgemäßen Art erfindungsgemäß durch die kennzeichnenden Merkmale des Patentanspruches 1 gelöst.

Weitere vorteilhafte Ausgestaltungen sind in den abhängigen Ansprüchen 2 bis 7 angegeben.

Im Hinblick auf eine Einrichtung der gattungsgemäßen Art ist die gestellte Aufgabe erfindungsgemäß durch die kennzeichnenden Merkmale des Patentanspruches 8 gelöst.

Weitere vorteilhafte Ausgestaltungen sind in den übrigen Ansprüchen angegeben.

In verfahrensgemäßer Hinsicht besteht die erfindungsgemäße Lösung hierbei darin, dass während des normalen Betriebes des Regelventils eine Diagnoseroutine durchgeführt zur Detektierung eines Druckanstiegs in der Ansaugleitung wird, indem in ausgewählten Betriebsbereichen das Steuerventil in definierter Weise geöffnet und geschlossen wird, währenddessen über mindestens einen Sensor Betriebsparameter zur Bestimmung des Druckanstiegs erfasst und mit den gespeicherten Soll-Daten verglichen und ggfs die Positionsregelung des Regelventils angepasst wird.

Die Diagnoseroutine bzw. der Diagnoselauf wird zeitlich in den Normalbetrieb der Brennkraftmaschine mit einbezogen. Ziel war hierbei in Berücksichtigung der Aufgabenstellung, dass eine sichere Diagnose regelmäßig durchgeführt werden kann.

Neuralgischer Punkt war hier also, wie im Stand der Technik angegeben, dass die Regelventile mit der Zeit verschmutzen. Da sie so kalibriert sind, dass sie für den unverschmutzten Fall optimal eingestellt sind, kann die Verschmutzung dazu führen, dass die Regelung als solche mit der Zeit driftet. Die Strömungsverhältnisse am Ventil sind nicht mehr optimal, wodurch der Motor nicht mehr in seinem optimalen Betriebspunkt arbeitet.

Mit Hilfe einer verfahrensgemäßen Steuerungs-/Regelungsroutine bestehend aus einem Diagnose- und Adaptionsverfahren soll die Produktionstoleranz des Regelventils, der Alterungsdrift durch Verschmutzung etc. ausgeglichen und die Funktionsfähigkeit des Systems über eine Durchflussdiagnose überprüft werden.

Hierzu wird in ausgewählten Betriebsbereichen des Motors durch definiertes Öffnen und Schließen des Regelventils der Durchfluss durch das Ventil variiert, was zu einem Druckveränderung in der Ansaugleitung führt. Der Druckanstieg soll über die vorhandene Sensorik in Form von Luftmassenmesser und/oder Drucksensor detektiert, umgerechnet und mit der Positions-Rückmeldung des Regelventils verglichen und ggfs. korrigiert werden.

Im nachfolgenden werden zwei Ausgestaltungsweisen des erfindungsgemäßen Verfahrens beschrieben. Diese erfindungsgemäße Diagnosetechnik kann dabei über verschiedene Arten von Sensoren realisiert werden.

Eine erfindungsgemäße Ausgestaltung ist der Betrieb mit Hilfe mindestens eines Sensors zur Erfassung der durchströmenden Luftmasse oder Luftmenge (Luftmassensensor). Dabei wird über die Messung der durchströmenden Luftmassen das Regelventil entsprechend korrigiert. Der hierfür zur Anwendung kommende Sensor ist zwar aufwendig aufgebaut, es hat sich jedoch gezeigt, dass dieser im vorliegenden Einsatzfall den Anteil der Frischluft im durchströmenden Gas exakt bestimmen kann, so dass der Betriebspunkt des Brennkraftmotors besonders genau ermittelbar ist.

Eine weitere denkbare Möglichkeit besteht darin, alternativ mindestens einen Drucksensor zu verwenden. Dabei wird der Staudruck in der Abgasleitung - vorzugsweise jedoch in der Ansaugleitung - gemessen, um die gemessenen Werte mit den hinterlegten erwarteten Werte zu vergleichen und dementsprechend das Ventil zu korrigieren.

Im Hinblick auf eine Einrichtung der gattungsgemäßen Art setzt die erfindungsgemäße Einrichtung das Verfahren konsequent und effizient um. Dabei ist angegeben, dass während des normalen Betriebes des Regelventils eine Diagnoseroutine zur Detektierung eines Druckanstiegs in der Ansaugleitung durchgeführt wird, indem in ausgewählten Betriebsbereichen das Regelventil in definierter Weise geöffnet und geschlossen wird, während dem über mindestens einen Sensor in der Ansaugleitung Betriebsparameter zur Bestimmung des Druckanstiegs erfasst und mit den gespeicherten Daten verglichen und gegebenenfalls die Positionsregelung des Regelventils anpassbar ist.

In weiterer Ausgestaltung ist angegeben, dass die Ansteuerparameter des Regelventils in einem adaptiven Datenfeld abgespeichert sind. Hierdurch können Driftsituationen durch einen automatischen Vergleich schnell erkannt werden. Entsprechend kann dann regelungstechnisch entgegengewirkt werden.

Neben der vorteilhaften Verwendung von Luftmassenmessern kann eine Drosselklappe vorgesehen werden, über welche zumindest während der Diagnosemessung unterkritische Strömungsverhältnisse in der Ansaugleitung erzeugt werden.

Die Erfindung ist in ihrer verfahrengemäßen Weise, sowie auch in ihrer einrichtungsgemäßen funktionalen Weise in der Zeichnung dargestellt und nachfolgend näher beschrieben. Es zeigt:

Fig. 1     schematische Darstellung aller wichtigen Komponenten nebst der gemessenen Parameter;

Fig. 2     Darstellung der Regelungsbereiche;

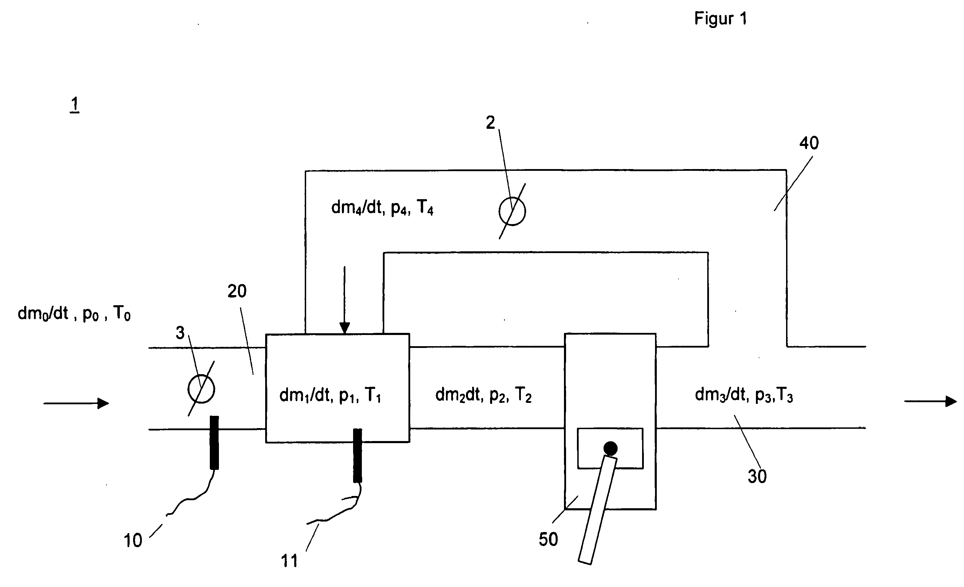

Figur 1 zeigt die wichtigsten Komponenten der Abgasrückführungseinrichtung mit den hier berücksichtigten physikalischen Parameter.

In Figur 1 ist am linken Rand der Darstellung die Ansaugleitung 20 für Luft zum Verbrennungsmotor 50 dargestellt. Vor bzw. innerhalb der Ansaugleitung 20 ist eine Drosselklappe 3 vorgesehen. In diesem Abschnitt ist der Luftmassenmesser 10 angeordnet, der innerhalb der Ansaugleitung 20 platziert ist, und dort quasi als Anemometer den Massenstrom nach bekannter Weise misst.

Der im Eingangsbereich der Ansaugleitung 20 vorliegende Massenstrom über die dort angeordnete Drosselklappe ergibt sich zu

$$dm_0/dt \ = \ A \ \Psi \ \sqrt{(2 p_0 / v_0)}$$

mit

A =     effektiver Querschnitt an der Drosselklappe
$\Psi$ =     Ausflussfunktion
$p_0$ =     Druck vor der Drosselklappe
$v_0$ =     Spezifisches Volumen vor der Drosselklappe

und der Ausflussfunktion

$$\Psi \ = \ \sqrt{(\kappa / \kappa - 1)} \cdot \sqrt{(p_1 / p_0)^{2/\kappa} - (p_1 / p_0)^{\kappa + 1/\kappa}}$$

mit

$p_1$ =     Druck hinter der Drosselklappe
$\kappa$ =     Isentropenexponent

für den Bereich der sogenannten unterkritischen Strömung.

Für den Bereich der überkritischen Strömung an der Drosselklappe gilt

$$\Psi = \Psi_{max}$$

bei einem Druckverhältnis von

$$p_1/p_0 = (2/\kappa+1)^{\kappa/\kappa-1}$$

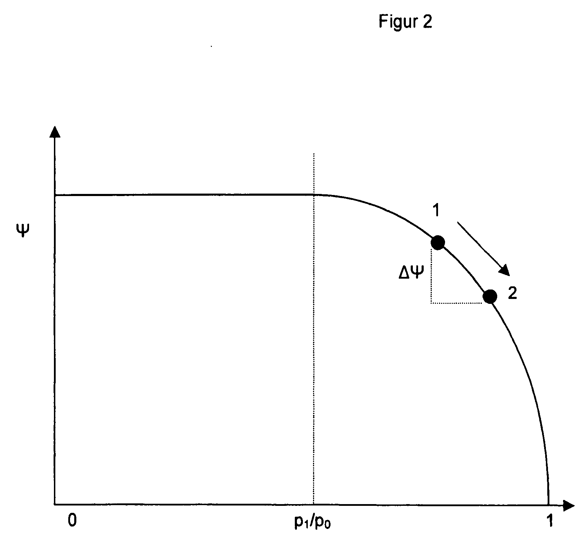

Dabei ergibt sich die in Figur 2 dargestellte Ausflussfunktion an der Drosselklappe, die später noch einmal näher beschrieben wird.

Zunächst noch weitere Elemente der Einrichtung gemäß Figur 1. Innerhalb der eigentlichen Ansaugleitung 20 ist der Saugrohrdrucksensor 11 angeordnet. Innerhalb der Ansaugleitung 20 im Abschnitt hinter der Drosselklappe 3 liegen dann die Werte $dm_1/dt$ , also der dortige Massendurchfluss, der Druck $p_1$ sowie die Temperatur $T_1$ vor. Dort wird dann zum Massendurchfluss $dm_1/dt$ der rückgeführte Abgasstrom mit den Parametern $dm_4/dt$ , $p_4$, sowie $T_4$ über die Rückführleitung 40 zugeführt, bzw mit zugeführt. Somit ergeben dies im nachfolgenden Ansaugrohrabschnitt die Parameter $dm_2/dt$ , $p_2$ sowie $T_2$ .

Innerhalb des Verbrennungsmotors 50 wird dann das Gemisch energetisch verwertet und das Abgas mit den Parametern $dm_3/dt$ , $p_3$ sowie $T_3$ ausgestoßen, und über die Abgasleitung 30 zum einen in einen Teilstrom als Abgas herausgeführt und ein anderer Teilstrom ergibt die Abgasrückführung.

Innerhalb der Rückführungsleitung 40 ist das Regelventil 2 angeordnet. Mit Hilfe des Regelventils 2 wird Einfluss auf die Größen $dm_4/dt$ , $p_4$ sowie $T_4$ genommen, die die Zusammensetzung des in den Verbrennungsraum des Verbrennungsmotors 50 zugeführten Gasgemisches direkt beeinflussen.

Das beschriebene Regelventil 2 hat, wie aus dieser Darstellung hervorgeht, den entscheidenden Einfluss auf den Prozess. Eine Drift, eine Verschmutzung oder ein Defekt desselben hat direkten Einfluss auf die Regelung.

In erfindungsgemäßer Weise wird somit dieses Regelventil 2 mit Steuerbefehlen zur Diagnose temporär beaufschlagt und zwar während des normalen Betriebes. Auf diese Weise kann die Diagnose und die damit verbundene Prüfung des Regelventils 2 koordiniert zu den Betriebsphasen des Motors 50 vorgenommen werden, wodurch diese dann auch beliebig oft durchgeführt werden kann. Das System wird dadurch erheblich genauer und vor allem wird die Regelung zeitstabil.

Anhand der Darstellung in Figur 2 wird die Ausflussfunktion an der Drosselklappe dargestellt. Der Verlauf der Ausflussfunktion gilt auch für das Regelventil 2. Aufgrund der Gaszusammensetzung und der Temperaturen gibt es jedoch Verschiebungen der Absolutwerte.

Es werden nun gemäß der genannten Ausgestaltungsversionen zwei Möglichkeiten angegeben.

Die erste davon ist der Betrieb mittels Luftmassenmesser 10. Um einen Druckanstieg in der Ansaugleitung 20 durch die Rückführleitung 40 mit Hilfe eines Luftmassenmessers 10 detektieren zu können, ist ein Betriebsbereich für das Verfahren so zu wählen, dass an der Drosselklappe 3 unterkritische Strömungsverhältnisse herrschen. Dies bedeutet, dass die Strömungsgeschwindigkeit im engsten Querschnitt kleiner ist als die örtliche Schallgeschwindigkeit, aber ausreichend Druckgefälle über dem Regelventil 2 vorliegt, um hinreichend hohe Rückführraten zu erzielen. Wird nun bei konstanter Position der Drosselklappe 3 die Abgasrückführung eingeleitet, kommt es zu einem Druckanstieg in der Ansaugleitung 20, und damit zu einer Verschiebung der Ausflussfunktion und damit zu einer geringeren angesaugten Luftmasse, die am Luftmassenmesser 10 registriert wird. Dies nennt man dann Lastpunktverschiebung.

Im Diagramm ist daher eine Betriebspunktverschiebung bei konstanter Drosselklappenstellung dargestellt. Der Betriebspunkt 1 stellt daher die Strömung ohne Abgasrückführung dar, und der Betriebspunkt 2 mit Abgasrückführung.

Mit dem bekannten Druckgefälle $p_3/p_4$ über dem Regelventil 2 und der Ausflussfunktion kann auf den Massenstrom und damit bei konstanter Temperatur $T_4$ auf den effektiven Öffnungsquerschnitt am Regelventil der Abgasrückführung geschlossen und die Lagerückmeldung überprüft bzw. korrigiert werden.

Für dieses Verfahren sind somit Betriebsweisen denkbar, bei denen Schub mit angestellter Drosselklappe und entsprechendem Drehzahlgradienten des Motors gearbeitet werden kann. Man nennt dies gefeuerten Betrieb, bzw. im anderen Fall ungefeuerten Betrieb.

Sinnvollerweise ist der Betriebsbereich natürlich so zu wählen, dass man sich im steilen Ast der Ausflussfunktion befindet, um ein ausreichend großes $\Delta\Psi$ zu erzielen. Begrenzende technische Größen sind hierbei die maximale Durchflussrate durch das Regelventil 2, sowie deren maximale Temperaturbelastbarkeit im gefeuerten Betrieb.

Eine weitere Betriebsweise ist das Verfahren mittels Drucksensor 11. Ein Druckanstieg in der Ansaugleitung

durch die Einleitung von rückgeführtem Abgas kann durch einen Saugrohrdrucksensor direkt erfasst werden. Über den Druckanstieg in der Ansaugleitung Δp und die Temperaturen $T_1=T_0$, $T_2$, $T_4$ kann der Partialdruck vom eingeleiteten rückgeführten Abgas bestimmt werden. Mit dem bekannten Druckgefälle über Regelventil $p_3/p_4$ und der Ausflussfunktion kann auf den Massenstrom und damit bei bekannter Temperatur $T_4$ auf den effektiven Öffnungsquerschnitt am Regelventil geschlossen und die Lagerückmeldung überprüft bzw. korrigiert werden. Hierzu sind vorherige Werte abgespeichert, mit denen dann verglichen und auf den ordnungsgemäßen Zustand des Ventils geschlossen werden kann.

Grundsätzlich ist das genannte Verfahren mit Saugrohrdrucksensor in allen Betriebsbereichen des Motors anwendbar, und ist nicht auf unterkritische Strömungsverhältnisse angewiesen.

Sinnvollerweise ist jedoch ein Bereich mit überkritischen Strömungsverhältnissen am Regelventil 2 zu wählen, da in diesen Bereichen der Massenstrom durch das Ventil nicht mehr vom Druckgefälle und der Ausflussfunktion, sondern direkt mit dem effektiven Querschnitt am Ventil über die örtliche Schallgeschwindigkeit

$$\omega = \sqrt{\kappa RT}$$

verknüpft ist. Der Massenstrom über das Steuerventil ergibt sich mit der Zustandsgleichung für ideale Gase zu

$$dm_{agr}/dt = d\nu/dt \cdot p/RT = pA/RT \cdot \omega = pA\sqrt{\kappa/RT}$$

mit

p =    Saugrohrdruck ($p = p_1 = p_4$)
A =    effektiver Querschnitt am Steuerventil
K =    Isentropenexponent.

Beide beschriebene Verfahren werden in einer Motorsteuerung mit eingebunden wie nachfolgend kurz beschieben.

Für die Beschreibung der Umsetzung der Verfahren ist für eine einfachere Veranschaulichung die Drosselklappe 3 konstant gehalten. Bei Motorsteuerungssystemen mit mechanischer Drosselklappe für die Laststeuerung, bei welcher das Gaspedal die Bewegung über einen Bowdenzug umsetzt, ist dies problemlos möglich, da der Fahrer über ein konstant gehaltenes Gaspedal auch die Drosselklappe konstant hält. Bei modernen Motorsteuerungen mit Momentenstruktur und Entkopplung von Gaspedal und Drosselklappe (E-Gas) wird automatisch eine Füllungsdifferenz kompensiert. Um eine Verfälschung der Ergebnisse des Verfahrens zu vermeiden, muss dieser Sachverhalt in der Software berücksichtigt werden. Ein Momentenverlust, der für den Fahrer spürbar ist, ist durch geeignete Maßnahmen zu kompensieren; beispielsweise durch einen Eingriff in die Zündung.

Die sich somit ergebenden Vorteile für ein derartiges Diagnose- und Adaptionsverfahren sind, dass in einer Serienproduktion von Einrichtungen dieser Art das maximale Potential im Hinblick auf die Senkung des Kraftstoffverbrauchs und der $NO_x$-Emissionen eine bessere Ausnutzung stattfindet, und damit die Toleranzen von Abgasrückführsystemen ausgeglichen werden. Dies dadurch, dass jedes einzelne System im Betrieb sich an die physischen Gegebenheiten selbstadaptiv anpassen kann. Die erfindungsgemäßen Verfahrensvarianten arbeiten darüber hinaus relativ. Das bedeutet, dass die absolute Genauigkeit der Sensoren, die zur Bestimmung der Druckerhöhung in der Ansaugleitung herangezogen werden, von untergeordneter Bedeutung sind.

**Bezugszeichenliste**

1    Einrichtung zur Abgasrückführung
2    Regelventil
3    Drosselklappe

10    Luftmassenmesser
11    Drucksensor
20    Ansaugleitung
30    Abgasleitung

40    Rückführleitung
50    Motor, Verbrennungsmotor

**Patentansprüche**

1. Verfahren zur Regelung der Abgasrückführung bei Verbrennungsmotoren, wobei Abgas aus der Abgasleitung über einen ventilgeregelten Bypass entnommen und der Ansaugleitung des Motors wieder zugeführt wird, **dadurch gekennzeichnet, dass** während des Betriebes des Regelventils eine Diagnoseroutine zur Detektierung eines Druckanstiegs in der Ansaugleitung durchgeführt wird, indem in ausgewählten Betriebsbereichen das Regelventil in definierter Weise geöffnet und geschlossen wird, währenddessen über mindestens einen Sensor Betriebsparameter zur Bestimmung des Druckanstiegs erfasst und mit den gespeicherten Daten verglichen und gegebenenfalls die Positionsregelung des Regelventils angepasst wird.

2. Verfahren nach Anspruch 1, **dadurch gekennzeichnet, dass** auf der Basis der jeweils aktuellen technischen Diagnose die Betriebs- und Ansteuerparameter des Regelventils adaptiv angelegt und abgespeichert werden.

3. Verfahren nach Anspruch 1 oder 2, **dadurch gekennzeichnet, dass** die Diagnose periodisch wiederholt wird.

4. Verfahren nach einem der vorhergehenden Ansprüche, **dadurch gekennzeichnet, dass** die Diagnose **dadurch** erfolgt, dass das Regelventil kurzzeitig definiert geöffnet und geschlossen wird, und die damit bewirkten Änderungen der über die Sensoren messbaren Parameter mit historischen Parameterwerten verglichen wird.

5. Verfahren nach einem der vorhergehenden Ansprüche 1 bis 4, **dadurch gekennzeichnet, dass** einer der sensorisch gemessenen Parameter der Luftmassenstrom ist.

6. Verfahren nach einem der vorhergehenden Ansprüche 1 bis 4, **dadurch gekennzeichnet, dass** einer der sensorisch gemessenen Parameter der Staudruck in der Abgasleitung und/ oder der Druck in der Ansaugleitung des Motors ist.

7. Verfahren nach Anspruch 5, **dadurch gekennzeichnet, dass** im Ansaugbereich mit Hilfe einer Drosselung zumindest während der Diagnose unterkritische Strömungsverhältnisse eingestellt werden.

8. Einrichtung zur Regelung der Abgasrückführung bei Verbrennungsmotoren, wobei Abgas aus der Abgasleitung über einen ventilgeregelten Bypass entnommen und der Ansaugleitung des Motors über ein Regelventil wieder zugeführt wird, **dadurch gekennzeichnet, dass** Mitteln zur durchführung einer Diagnoseroutine vorgesehen sind und dass während des normalen Betriebes des Regelventils (2) die Diagnoseroutine zur Detektierung eines Druckanstiegs in der Ansaugleitung durchgeführt wird, indem in ausgewählten Betriebsbereichen das Regelventil (2) in definierter Weise geöffnet und geschlossen wird, währenddessen über mindestens einen Sensor (10, 11) in der Ansaugleitung (20) Betriebsparameter zur Bestimmung des Druckanstiegs erfasst und mit den gespeicherten Daten verglichen und gegebenenfalls die Positionsregelung des Regelventils (2) anpassbar ist.

9. Einrichtung nach Anspruch 8, **dadurch gekennzeichnet, dass** die Ansteuerparamter des Regelventils (2) in einem adaptiven Datenfeld abspeicherbar sind.

10. Einrichtung nach Anspruch 8 oder 9, **dadurch gekennzeichnet, dass** einer der Sensoren ein Luftmassenmesser (10) ist.

11. Einrichtung nach Anspruch 10, **dadurch gekennzeichnet, dass** der Luftmassenmesser (10) in der Ansaugleitung (20) der Einrichtung angeordnet ist.

12. Einrichtung nach einem der Ansprüche 8 bis 11, **dadurch gekennzeichnet, dass** in der Ansaugleitung (20) eine Drosselklappe (3) vorgesehen ist über welche zumindest während der Diagnose unterkritische Strömungsverhältnisse in der Ansaugleitung (20) einstellbar sind.

13. Einrichtung nach Anspruch 8 oder 9, **dadurch gekennzeichnet, dass** einer der Sensoren ein Drucksensor (11) ist.

14. Einrichtung nach Anspruch 12, **dadurch gekennzeichnet, dass** der Drucksensor (11) im Strömungsbereich nach der Abgasrückführung (40) in der Ansaugleitung (20) der Einrichtung angeordnet ist.

**Claims**

1.  Method for controlling the exhaust gas recirculation of internal combustion engines, wherein the exhaust gas is collected from the exhaust pipe by the valve-regulated bypass and carried back to the intake of the engine, **characterized in that** during the operation of the regulating valve a diagnosis routine is carried out in order to detect the increase of pressure in the inlet, by opening or closing the regulating valve in selected operation sectors in a defined way, while operating parameters for the determination of the pressure increase are measured by at least one sensor, compared with the saved data by adapting the positioning regulation of the regulating valve if necessary.

2.  Method according to claim 1, **characterized in that** on the basis of the respective actual technical diagnosis the operating and control parameters of the regulating valve are adaptively designed and saved.

3.  Method according to claim 1 or 2, **characterized in that** the diagnosis is periodically repeated.

4.  Method according to one of the previous claims, **characterized in that** the diagnosis is carried out by briefly opening and closing the regulating valve according to a certain definition, and by comparing the so caused changes of the parameters measurable by the sensors with the values of the parameters.

5.  Method according to one of the previous claims 1 to 4, **characterized in that** one of the parameters measured by the sensor is the air-mass flow.

6.  Method according to one of the previous claims 1 to 4, **characterized in that** one of the parameters measured by the sensor is the back pressure in the exhaust pipe and/or the pressure in the inlet of the engine.

7.  Method according to claim 5, **characterized in that** in the inlet sector at least during the diagnosis the under-critical flow conditions are set up by a flow restrictor.

8.  Device for controlling the exhaust gas recirculation for internal combustion engines, wherein the exhaust is taken from the exhaust pipe by a valve-regulated bypass and conducted back to the inlet of the engine by a regulating valve, **characterized in that** means are designed to carry out a diagnosis routine and that during the normal operating of the regulating valve (2) the diagnosis routine is carried out to detect an increase of pressure in the inlet, by opening or closing the regulating valve (2) in selected operation sectors in a defined way, while operating parameters for the determination of the pressure increase are measured by at least one sensor (10, 11) in the inlet (20), compared with the saved data so that if necessary the positioning regulation of the regulating valve (2) can be adapted.

9.  Device according to claim 8, **characterized in that** the control parameters of the regulating valve (2) can be saved into ad adaptive data field.

10. Device according to the claims 8 and 9, **characterized in that** one of the sensors is an air-mass measurer (10).

11. Device according to claim 10, **characterized in that** the air-mass measurer (10) is aligned in the inlet (20) of the device.

12. Device according to one of the claims 8 to 11, **characterized in that** in the inlet (20) there is a throttle (3) by which at least during the diagnosis under-critical flow conditions in the inlet (20) can be set up.

13. Device according to claim 8 or 9, **characterized in that** one of the sensors is a pressure sensor (11).

14. Device according to claim 12, **characterized in that** the pressure sensor (11) in the flow sector is aligned after the exhaust recirculation pipe (40) in the inlet (20) of the device.

**Revendications**

1.  Procédé conduisant à la régulation du retour du gaz d'échappement pour les moteurs à explosion, par lequel le gaz d'échappement est récupéré de sa conduite à travers une conduite de relais munie des soupapes, par cela la conduite d'aspiration du moteur est rendue libre; **caractérise en ce que,** lors du fonctionnement de la soupape de régulation un diagnostic de routine pour la détection d'une hausse de pression dans la conduite d'aspiration soit effectué, de sorte que dans les zones en fonctionnement bien choisies la soupape de régulation puisse s'ouvrir et se refermer d'une manière bien définie, d'une façon que pendant ce temps, au moins un capteur des paramètres de fonctionnement est saisi pour la détermination de la hausse de pression et comparé aux données déjà enregistrées pour adapter à la limite la position de la soupape en place.

2. Procédé selon la revendication 1, **caractérise en ce que,** sur base de l'actuel diagnostic respectif, les paramètres de fonctionnement et les paramètres visés de la soupape en place soient établis et sauvegardés.

3. Procédé selon les revendications 1 ou 2, **caractérise en ce que** le diagnostic soit répété suivant une période bien déterminée.

4. Procédé selon une des revendications précédentes, **caractérise en ce que** le diagnostic a lieu, que la soupape en place soit mise de telle sorte qu'elle s'ouvre et se referme en un temps très court, et que les modifications y relatives des paramètres causées par les capteurs soient comparées aux valeurs des paramètres historiques.

5. Procédé selon l'une des précédentes revendications 1 à 4, **caractérise en ce qu'**un des paramètres mesurés par les capteurs soit un courant de masse d'air.

6. Procédé selon l'une des revendications 1 à 4, **caractérise en ce qu'**un des paramètres mesurés par les capteurs soit le paramètre de la pression du bouchon dans la conduite du gaz d'échappement et/ou de la pression dans la conduite d'aspiration du moteur.

7. Procédé selon la revendication 5, **caractérise en ce que** dans la zone d'aspiration, avec l'aide d'une diminution tout au moins lors du diagnostic, présente des rapports d'écoulement en dessous la moyenne.

8. Installation pour une régulation du retour de gaz d'échappement pour les moteurs à explosion, par laquelle le gaz d'échappement est récupéré à travers une conduite de relais munie des soupapes tandis que la conduite d'aspiration du moteur est rendue libre à travers la soupape de régulation en place, **caractérise en ce que,** les moyens de la mise en place d'un diagnostic de routine sont envisagés et que pendant le fonctionnement normal de la soupape de régulation (2), le diagnostic de routine pour la détection d'une hausse de pression puisse être réalisé dans la conduite d'aspiration; de la sorte, dans les zones choisies en activité, la soupape de régulation (2), est ouverte et refermée d'une manière définie; pendant ce temps au moins un capteur (10, 11) est fixé dans les paramètres de fonctionnement de la conduite d'aspiration (20) afin de déterminer la hausse de la pression et ensuite comparé aux données enregistrées, et à la limite ceci permet d'adapter le réglage de la position de la soupape de régulation (2).

9. Installation selon la revendication 8, **caractérise en ce que** les paramètres visés de la soupape de régulation (2) sont enregistrés dans un champ de données adapté.

10. Installation selon les revendications 8 et 9, **caractérise en ce qu'**un des capteurs est un mesureur de la masse d'air (10).

11. Installation selon la revendication 10, **caractérise en ce que** le mesureur de la masse d'air (10) soit rangé dans la conduite de l'installation.

12. Installation selon l'une des revendications de 8 à 11, **caractérise en ce que** un clapet de diminution (3) soit envisagé dans la conduite d'aspiration (20), à travers lequel au moins pendant le diagnostic, des rapports d'écoulement en dessous de la moyenne sont présentés.

13. Installation selon la revendication 8 ou 9, **caractérise en ce que**, un des capteurs soit un capteur de la pression (11).

14. Installation selon la revendication 12, **caractérise en ce que** le capteur de la pression (11) dans la zone d'écoulement soit rangé dans la conduite d'aspiration (20) après le retour du gaz d'échappement.

Figur 1

EP 1 429 008 B1

Figur 2

**EP 1 429 008 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19910846 A1
- DE 19849256 A1